**Europäisches Patentamt**

**European Patent Office**

**Office européen des brevets**

(19)

(11) Numéro de publication: **0 056 773 B1**

(12) **FASCICULE DE BREVET EUROPEEN**

(45) Date de publication du fascicule du brevet: 25.06.86

(51) Int. Cl.⁴: **F 27 B 3/18,** C 21 C 5/52, F 27 D 3/00

(21) Numéro de dépôt: **82400101.0**

(22) Date de dépôt: **20.01.82**

(54) **Four électrique destiné à la fusion de ferrailles et alimenté en continu.**

(30) Priorité: **20.01.81 FR 8100996**

(43) Date de publication de la demande: **28.07.82 Bulletin 82/30**

(45) Mention de la délivrance du brevet: **25.06.86 Bulletin 86/26**

(84) Etats contractants désignés: **AT BE CH DE FR GB IT LI LU NL SE**

(56) Documents cités:
**DE - A - 2 434 747**
**DE - C - 148 129**
**FR - A - 1 447 922**
**FR - A - 2 065 880**
**US - A - 3 441 651**
**US - A - 3 896 257**
**US - A - 4 225 745**

**H. Lecompte Cours d'Acierie, Editions de la Revue de Metallurgie, p. 167,171**

(73) Titulaire: **CLECIM SA, 107 boulevard de la Mission Marchand, F-92402 Courbevoie Cedex (FR)**

(72) Inventeur: **Davene, Jean, 26 rue du Bel Air, F-42390 Villars (FR)**

(74) Mandataire: **Phélip, Bruno et al, c/o Cabinet Harlé & Phélip 21, rue de la Rochefoucauld, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention se rapporte à un four électrique à arcs permettant une économie d'énergie et en outre apte à fondre en continu de la ferraille tout-venant, telle qu'on la trouve dans le commerce et dont la longueur peut aller jusqu'à quatre mètres et plus.

On connaît des fours électriques, tel que par exemple celui décrit dans le brevet FR-A-2 065 880, qui peuvent être alimentés en continu par des ferrailles courtes ou des éponges de fer. De tels fours utilisent des ouvertures de chargement de faible diamètre situées dans la voûte du four, et ne peuvent évidemment pas fonctionner avec des ferrailles de grandes dimensions.

On connaît par ailleurs des fours électriques à arcs destinés à la réduction de minerais, tels que décrits dans le brevet FR-A-1 447 922, dont une des parois latérales de l'enceinte est percée, à un niveau situé au-dessus de la sole, d'un tunnel d'alimentation en minerai. Dans ce dispositif, le minerai est contenu dans un puits, relié à l'enceinte intérieure du four par ledit tunnel, qui se trouve au même niveau que la base du puits, et ce minerai est poussé dans le four à travers ce tunnel par plusieurs pistons fonctionnant alternativement.

Le four électrique de l'invention présente l'avantage de pouvoir être alimenté en continu avec des ferrailles de grandes dimensions. Il permet par ailleurs, quelles que soient les dimensions des ferrailles, une récupération de la chaleur des fumées permettant de réduire l'énergie électrique nécessaire à la fusion. Il est du type comportant une sole destinée à recevoir le métal fondu, fixe en position, et une enceinte intérieure définissant avec la sole le laboratoire du four, la partie correspondante de l'enceinte constituant la voûte du four, et il est caractérisé en ce que ladite enceinte intérieure définit en outre avec un plancher, adjacent latéralement à la sole et situé plus haut qu'elle de telle manière qu'il soit contigü au bord extérieur de la sole, un espace latéral destiné au stockage des ferrailles, en ce que ledit espace latéral occupe un volume au moins égal au tiers du volume occupé par l'espace intérieur du four, en ce que ledit espace latéral est équipé d'une ouverture, du genre trappe ou porte, situé à sa partie supérieure et permettant de l'alimenter par des ferrailles froides destinées à reposer sous forme d'un tas sur ledit plancher, en ce qu'il est équipé d'un dispositif permettant de pousser vers la sole la base dudit tas de ferrailles, et en ce que la conduite d'évacuation des fumées du four a son point de départ sur une paroi dudit espace séparée de la sole par le tas de ferrailles emmagasiné sur le plancher dudit espace latéral, de façon à ce que ledit tas de ferrailles soit traversé par lesdites fumées.

De préférence l'extrémité supérieure de l'espace latéral est située au-dessus de la voûte du four.

L'invention sera mieux comprise à l'aide de la description suivante d'un exemple de réalisation, en référence aux dessins annexés dans lesquels:

    – la figure 1 est une vue latérale très schématique du dispositif de l'invention, montrant l'introduction de ferrailles froides dans l'enceinte du four

    – la figure 2 montre schématiquement l'amenée d'un nouveau stock de ferrailles froides devant la porte de chargement du four

    – la figure 3 montre schématiquement la phase de poussée des ferrailles préchauffées vers la zone de fusion

    – la figure 4 est une vue de dessus très schématique de l'installation de l'invention.

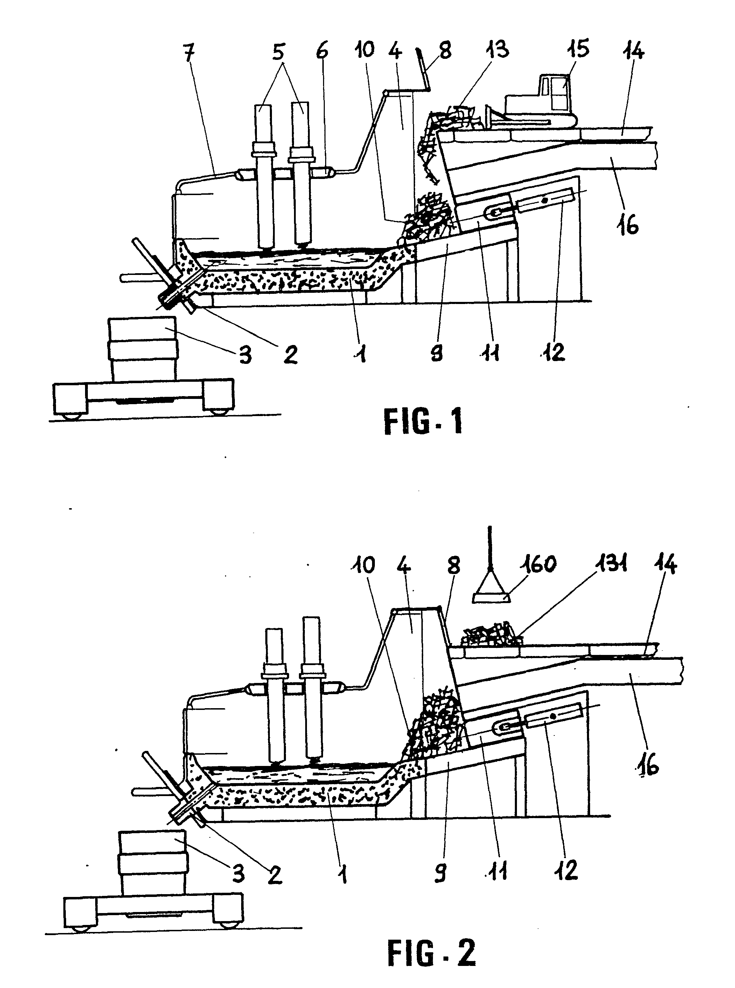

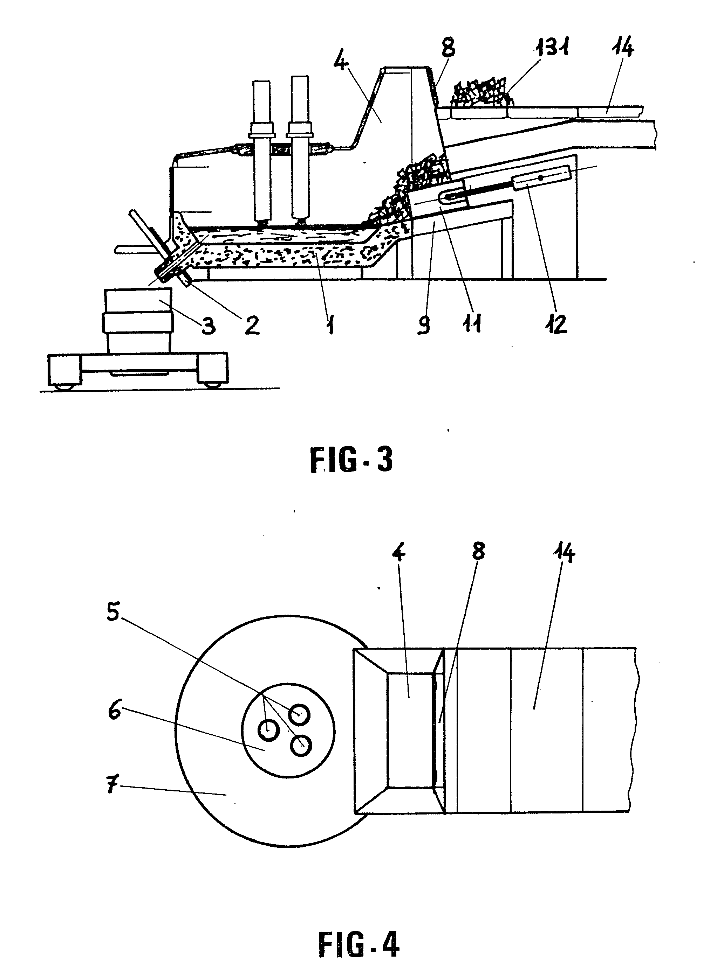

En se reportant tout d'abord à l'ensemble des figures 1 et 4, on y voit que le four électrique de l'invention, qui est un four fixe en position et qui comporte une sole classique 1 en matériau réfractaire munie d'une évacuation d'acier liquide vers une poche 3 constituée par une busette à tiroir 2 classique, a son enceinte intérieure réalisée de façon très particulière, car définissant, à côté de la sole 1 et avec le plancher 9, un espace latéral 4 d'assez grand volume destiné à un stockage préalable des ferrailles froides avant leur introduction dans la zone de fusion, c'est-à-dire sur la sole 1, là où agissent les arcs électriques provenant des électrodes 5.

L'espace latéral 4 conforme à l'invention a un volume important, par exemple de l'ordre d'un bon tiers de l'ensemble du volume de l'enceinte intérieure du four, de façon à ce que d'une part on puisse y introduire facilement des ferrailles de grandes dimensions et à ce que d'autre part on puisse y stocker un volume important de ferrailles, cet espace latéral 4 étant raccordé à la conduite 16 d'évacuation des fumées du four, de façon à être traversé par lesdites fumées, ce qui permet de profiter au mieux de l'avantage particulier de l'invention qui consiste à récupérer la chaleur des fumées pour réaliser un préchauffage des ferrailles avant qu'elles soient introduites dans la zone de fusion. Préférentiellement, comme c'est le cas dans l'exemple considéré, l'espace latéral 4 de l'invention a une hauteur importante, de l'ordre de deux à trois fois celle de la partie centrale 6 de la voûte 7 du four par exemple, ce qui permet, comme on le verra ci-dessous, une mise en oeuvre particulièrement avantageuse de l'invention, d'une part parce qu'elle permet d'alimenter aisément l'espace 4 en ferrailles froides à l'aide d'une trappe ou porte 8 placée à la partie supérieure dudit espace, et d'autre part parce qu'elle permet de profiter à l'optimum du préchauffage des ferrailles dû aux fumées du fait qu'il est possible de n'alimenter la sole qu'avec les ferrailles situées à la partie inférieure du tas 10 stocké dans l'espace latéral 4, c'est-à-dire les plus chaudes parce que situées le plus près de la zone active de la sole, et parce qu'ayant séjourné plus longtemps dans l'espace latéral 4 que les ferrailles se trouvant à la partie supérieure dudit tas 10.

Comme on peut le voir sur les figures 1 et 4, l'enceinte intérieure du four a, en raison de la présence de l'espace latéral 4 de l'invention, une forme tourmentée, qu'il serait très difficile de réaliser à l'aide de matériau réfractaire: hormis la sole 1 et la zone 6 réalisées en matériau réfractaire et hormis la plus grande partie du plancher 9 de l'espace latéral 4 réalisé sous forme de construction massive et incliné vers la sole comme représenté sur la figure 1, les parois et la voûte du four sont métalliques et comportent, dans les parties les plus chaudes, des zones refroidies par circulation d'eau, ou autre fluide, cette technique étant maintenant courante dans la constitution des parois de fours électriques.

Par ailleurs, afin qu'il soit possible de pousser régulièrement la partie inférieure du tas de ferrailles 10 stocké dans l'espace latéral 4 vers la zone de fusion, un bloc d'acier 11 servant de poussoir et actionné par un vérin 12 est placé, en sa position reculée comme représenté sur la figure 1, sur la partie du plancher incliné 9 qui est extérieure à l'enceinte du four. Comme on le voit sur le dessin, le bloc pousseur 11a, en position reculée, avantageusement son front avant situé à la limite ou au dehors de l'espace latéral 4, afin de ne pas gêner la formation du tas 10.

Sur la figure 1, on a représenté la phase d'introduction, dans l'espace latéral 4 de l'invention, d'une portion 13 de ferrailles froides venant s'ajouter au tas 10 de ferrailles déjà préchauffées que contient ledit espace 4.

Pour introduire la portion 13, qui se trouvait sur le plancher de travail 14, on a ouvert, par basculement vers le haut, la porte 8, et l'on pousse alors, à l'aide d'un bouteur 15, ladite portion de ferrailles froides à l'intérieur de l'espace latéral 4 où elle tombe sur le dessus du tas 10.

Puis, comme on le voit maintenant sur la figure 2, on referme la porte 8 et on amène, à l'aide d'un électroaimant 160, une nouvelle portion 131 de ferrailles froides sur le plancher de travail 14 de l'aciérie.

Ensuite, comme on le voit sur la figure 3, on fait avancer, par sortie de la tige du vérin 12, le poussoir 11 vers l'avant, ce qui a pour effet, comme on le voit clairement sur le dessin, d'introduire, dans le laboratoire délimité par la sole 1, uniquement la partie inférieure du tas de ferrailles 10, partie qui est la plus chaude non seulement parce qu'elle est située le plus près de la zone de rayonnement maximal, mais encore parce qu'elle a séjourné le plus longtemps dans l'espace latéral 4, comme on le voit à l'examen des figures 1 et 2, et a été traversée par les fumées aspirées par la conduite d'évacuation 16.

## Revendications

1. Four électrique à arcs destiné à la fusion de ferrailles et à alimentation continue, comportant une sole (1) destinée à recevoir le métal fondu, fixe en position, et une enceinte intérieure définissant avec la sole (1) le laboratoire du four, la partie correspondante de l'enceinte constituant la voûte (7) du four, caractérisé en ce que ladite enceinte intérieure définit en outre avec un plancher (9), adjacent latéralement à la sole (1) et situé

plus haut qu'elle de telle manière qu'il soit contigü au bord extérieur de la sole, un espace latéral (4) destiné au stockage des ferrailles, en ce que ledit espace latéral occupe un volume au moins égal au tiers du volume occupé par l'espace intérieur du four, en ce que ledit espace latéral est équipé d'une ouverture (8), du genre trappe ou porte, situé à sa partie supérieure et permettant de l'alimenter par des ferrailles froides (13, 131) destinées à reposer sous forme d'un tas (10) sur ledit plancher (9), en ce qu'il est équipé d'un dispositif (11) permettant de pousser vers la sole (1) la base dudit tas (10) de ferrailles, et en ce que la conduite (16) d'évacuation des fumées du four a son point de départ sur une paroi dudit espace séparée de la sole (1) par le tas (10) de ferrailles emmagasiné sur le plancher (9) dudit espace latéral (4), de façon à ce que ledit tas de ferrailles soit traversé par lesdites fumées.

2. Four électrique selon la revendication 1, caractérisé en ce que l'extrémité supérieure dudit espace latéral est située au-dessus de la voûte (7) du four.

## Claims

1. Electric arc furnace intended to melt scrap-iron and to be continuously fed, comprising a hearth (1) which is intended to collect the molten metal and is rigidly fixed, and an internal plenum defining with the hearth the furnace laboratory, the corresponding portion of the plenum constituting the furnace roof (7), characterized in that a side space (4) for storing the scrap-iron is moreover defined by said internal plenum together with a floor (9) which is sidely adjacent to the hearth (1) and located higher than said hearth so as to be adjacent to the external edge of said hearth:

in that said side space occupies a volume at least equal to at least one third of the inner volume of the furnace;

in that said side space is equipped with an opening (8) of the trap or door type located at its upper part so as to be feedable with cold scrap-iron (13, 131) intended to lie as a pile (10) on said floor (9);

in that it is equipped with a means (11) enabling the base of said pile to be pushed toward the hearth (1);

and in that the conduit (16) for exhausting the fumes from the furnace has its starting location on a wall of said space, which is reparated from the hearth (1) by the scrap-iron pile (10) stored on the floor (9) of said side space (7) so that said scrap-iron pile be crossed by said fumes.

2. Electric furnace according to claim 1, characterized in that the upper end of said side space is located beyond the furnace roof (7).

## Patentansprüche

1. Kontinuierlich beschickter Elektrolichtbogenofen zum Schmelzen von Schrott, bestehend aus einer Sohle (1), die das geschmolzene Metall aufnimmt und eine feste Position hat, und aus einem inneren Gehäuse, das mit der Sohle (1) den Brennraum des Ofens bildet, wobei der entsprechende Teil des Gehäuses das Ofengewölbe (7) bildet, dadurch gekennzeichnet, dass das erwähnte innere Gehäuse ausserdem mit einem Boden (9), der sich seitlich neben der Sohle (1) befindet und höher als diese so angeordnet ist, dass er am äusseren Rand der Sohle angrenzt, einen seitlichen Raum (4) zur Lagerung des Schrottes bildet, dass der genannte seitliche Raum ein Volumen einnimmt, das zumindest gleich dem dreifachen Volumen ist, welches vom Innenraum des Ofens eingenommen wird, dass der erwähnte seitliche Raum mit einer Öffnung (8) nach Art einer Klappe oder Tür ausgestattet ist, die am oberen Teil angeordnet ist und die Beschickung mit kaltem Schrott (13, 131) ermöglicht, der in Form eines Haufens (10) auf dem erwähnten Boden (9) ruhen soll, dass der Ofen mit einer Vorrichtung (11) ausgerüstet ist, die den unteren Teil des Schrotthaufens (10) in Richtung auf die Sohle (1) schiebt, und dass der Kanal (16) für die Ableitung des Rauches aus dem Ofen seinen Ausgangspunkt auf einer Wand des erwähnten Raumes hat, die von der Sohle (1) durch den Schrotthaufen (10) getrennt ist, welcher derart auf dem Boden (9) des genannten seitlichen Raumes (4) aufgestapelt ist, dass er von dem erwähnten Rauch durchströmt wird.

2. Elektrolichtbogenofen nach Anspruch 1, dadurch gekennzeichnet, dass das obere Ende des genannten seitlichen Raumes oberhalb des Ofengewölbes (7) angeordnet ist.

FIG · 1

FIG · 2

FIG·3

FIG·4